# EUROPÄISCHE PATENTSCHRIFT

(11) **EP 1 209 038 B1**
(45) Veröffentlichungstag und Bekanntmachung des Hinweises auf die Patenterteilung: **28.04.2004**
(21) Anmeldenummer: 01125580.9
(22) Anmeldetag: 25.10.2001
(51) Int. Cl.: B60R 17/02, F16N 7/38

(54) **Fahrzeuggebundene Zentralschmieranlage**
Central lubrication system for vehicle
Dispositif de lubrification centralisée pour véhicule

(30) Priorität: 10.11.2000 DE 20019186 U
(43) Veröffentlichungstag der Anmeldung: 29.05.2002
(73) Patentinhaber: Baier & Köppel GmbH & Co. KG, 91257 Pegnitz (DE)
(72) Erfinder: Brendel, Jürgen, 91278 Pottenstein (DE)
(74) Vertreter: Zech, Stefan Markus Dipl.-Phys.

(56) Entgegenhaltungen:
- EP-A- 0 159 580
- EP-A- 0 595 097
- DE-A- 2 458 711
- GB-A- 2 155 417
- US-A- 3 456 761

## Beschreibung

Die Erfindung betrifft eine fahrzeuggebundene Zentralschmieranlage als Einbauteil für ein Fahrzeug umfassend eine Schmierstoffpumpe, ein oder mehrere Verteiler, eine Mehrzahl von Verteilerleitungen, die jeweils eine mit Schmierstoff zu beaufschlagende Schmierstelle mit dem zugeordneten Verteiler verbinden und Schmiermittelzuführungen zwischen der Schmierstoffpumpe und dem einen oder mehreren Verteilern, die jeweils eine vorbestimmte Menge Schmierstoff an den zugeordneten Verteiler fördern.

Um eine Vielzahl von Schmierstellen mit Schmierstoff versorgen zu können, wird herkömmlicherweise eine vorbeschriebene Anordnung nach dem Prinzip der indirekten Schmierstoffversorgung eingesetzt. Hierbei wird Schmierstoff zunächst an einem oder mehrere Verteiler, insbesondere Progressivverteiler geleitet. An den Verteilern wird der Schmierstoff aufgeteilt und an eine Mehrzahl von Schmierstellen geführt. Eine derartige Anordnung ist sinnvoll, wenn eine größere Anzahl von Schmierstellen mit Schmierstoff beaufschlagt werden soll. Allerdings ist eine Erweiterung auf zusätzliche Schmierstellen bei dieser Anordnung sehr aufwendig, da der Verteiler meist umständlich erweitert werden muß.

Aus der gattungsbildenden EP-A-159 580 ist eine Anordnung bekannt, bei der von Schmiermittelzuführungen zwischen Schmierstoffpumpe und dem einen oder mehreren Verteilern auch ein Abzweig an ein einzelnes Zumessventil gelegt werden kann, um von dort Schmierstoff über ein Zumessventil einer einzelnen Schmierstelle zuzuführen.

Die Aufgabe der vorliegenden Erfindung besteht darin, eine fahrzeuggebundene Zentralschmieranlage vorzuschlagen, die sich wesentlich universeller auf bestimmte Anforderungen an einem bestimmten Fahrzeug konfigurieren läßt. Gleichzeitig soll eine entsprechende Schmiermittelpumpe angegeben werden.

Diese Aufgabe wird mit einer Zentralschmieranlage nach den Merkmalen des Anspruches 1 bzw. einer Schmierstoffpumpe nach den Merkmalen des Anspruches 9 gelöst. Vorteilhafte Weiterbildungen sind in den Unteransprüchen angegeben.

Ein Kerngedanke der vorliegenden Erfindung besteht darin, daß die bislang völlig getrennten Konzepte einer indirekten Schmierung (über Verteiler) und einer direkten Schmierung (direkte Zuführung von Schmierstoff aus der Schmiermittelpumpe an die Schmierstellen) miteinander in einer solchen Weise kombiniert werden, daß je nach Anwendungsfall stärkeres Gewicht auf eine direkte Schmierung bzw. indirekte Schmierung gelegt werden kann.

Gleichzeitig wird eine Schmiermittelpumpe angegeben, welche beide Anwendungsmöglichkeiten und darüber hinaus auch die Kombination beider Anwendungsmöglichkeiten gestattet.

Dabei weist die Schmiermittelpumpe mindestens einen Verteileranschluß zum Anschluß einer Schmiermittelzuführung als Zuleitung für einen Verteiler und mindestens einen Direktanschluß zum Anschluß einer an eine Schmierstelle führenden Direktleitung auf. Die Pumpe ist damit bereits anschlußseitig an eine Vielzahl von Einsatzmöglichkeiten vorbereitet. Eine zentrale Schmieranlage kann somit auf die unterschiedlichsten Anforderungen und auch pro Anforderung noch in unterschiedlichster Weise konfiguriert werden. Es können ein Teil von Schmierstellen über einen oder mehrere Verteiler indirekt versorgt werden. Gleichzeitig oder alternativ lassen sich über eine Mehrzahl von Direktanschlüssen bestimmte, ausgewählte Schmierstellen auch direkt versorgen. Somit lassen sich mit einer einzigen Schmiermittelpumpe die verschiedensten Anwendungsmöglichkeiten durch die pro Anwendungsfall noch immer gegebene Freiheit unterschiedlicher Konfigurationen optimal abdecken.

Es sind innerhalb der Schmiermittelpumpe den Verteileranschlüssen Verteilerpumpen und den Direktanschlüssen Direktpumpen zugeordnet. Somit übernehmen die Verteilerpumpen die Aufgabe der indirekten Schmiermittelzuführung, indem Sie eine bestimmte, meist größere Menge an Schmierstoff an die Verteiler führen. Die Direktpumpen übernehmen die Aufgabe einer direkten Schmiermittelzuführung an die Schmierstellen, wobei die zu fördernde Schmierstoffmenge meist geringer ist.

Typische Förderleistungen für die Verteilerpumpen können pro Pumpe beispielsweise mindestens 0,04 cm3/Hub, vorzugsweise mindestens 0,08 cm3/Hub und weiter vorzugsweise mindestens 0,14 cm3/Hub betragen. Bei den Direktpumpen ist in der Regel eine geringere Förderleistung ausreichend, beispielsweise eine Förderleistung im Bereich von 0,005 cm3/Hub bis 0,05 cm3/Hub.

Nach einem besonders bevorzugten, konstruktionstechnisch günstigen Aspekt der vorliegenden Erfindung, werden die Verteilerpumpen und die Direktpumpen gemeinsam durch einen umlaufenden Exzenter innerhalb der Schmiermittelpumpe angetrieben. Hierdurch läßt sich die Aufgabe eines gemeinsamen Antriebes für alle Einzelpumpen, die jeweils zum Teil stark unterschiedliche Fördermenge aufweisen, auf äußerst einfache und elegante Weise lösen.

Um die bei einer Mehrzahl bei Einzelpumpen vergleichsweise hohen Reibungskräfte zu verringern, ist der umlaufende Exzenter in einer besonders bevorzugten Ausgestaltung außenseitig mit einem Nadellagerkäfig versehen.

Beim Stand der Technik wurde die aufgebrachte Schmierstoffmenge anhand der Betätigungszeitdauer der Schmierstoffpumpe bestimmt. Dieses Vorgehen ist aufgrund der zwangsläufig auftretenden Viskositätsschwankungen des Schmierstoffs, beispielsweise aufgrund von Temperaturschwankungen, mit Fehlern behaftet. Nach einem weiteren Aspekt der vorliegenden Erfindung sind daher bei der erfindungsgemäßen Zentralschmieranlage Meßeinrichtung zur Erfassung der Umdrehungszahl des Exzenters der Schmierstoffpumpe vorgesehen, um die ausgebrachte Menge an Schmierstoff zu erfassen.

Nach einem weiteren vorteilhaften Aspekt der vorliegenden Erfindung weist die Schmierstoffpumpe der Zentralschmieranlage eine Schnittstelle zum Anschluß an einen zentralen Bordcomputer eines Fahrzeugs auf. Nach dem Stand der Technik wird eine Schmierstoffpumpe bereits mit einer integrierten Steuerung betrieben, in der beispielsweise Schmierzeit sowie Zykluszeit innerhalb gewisser Bereiche einstellbar sind.

Wird die Schmierstoffpumpe bzw. die Zentralschmieranlage über eine Schnittstelle an den zentralen Bordcomputer des Fahrzeugs angeschlossen, so werden die Steuerung und Überwachung sowie die Bedienung der Zentralschmieranlage wesentlich komfortabler. Auch der Füllstand läßt sich bequem ablesen bzw. überwachen. Schließlich wird die Zentralschmieranlage herstellungstechnisch günstiger, da eine separate Steuerungseinheit entfallen kann.

In einer konkreten, besonders bevorzugten Ausführungsform umfaßt die Schmiermittelpumpe mindestens zwei Verteileranschlüsse und mindestens vier, vorzugsweise mindestens acht Direktanschlüsse. Über die Mehrzahl der Direktanschlüsse lassen sich einzelne u.U. auch weit auseinander liegende Schmierstellen auf vergleichsweise einfache Weise versorgen. Die Verteileranschlüsse gestatten die Versorgung von mindestens zwei angeschlossenen Verteilern, die beispielsweise an bestimmten Aufbauten, wie den Aufbau eines Müllfahrzeugs angeordnet sein können.

Die Erfindung wird nachstehend auch hinsichtlich weiterer Merkmale und Vorteile anhand der Beschreibung von Ausführungsbeispielen und unter Bezugnahme auf die beiliegenden Zeichnungen näher erläutert. Hierbei zeigen:
- Fig. 1: eine erste Ausführungsform einer Zentralschmieranlage nach der Erfindung;
- Fig. 2: eine Ausführungsform einer Schmierstoffpumpe nach der Erfindung in Seitenansicht;
- Fig. 3: eine Draufsicht auf die Schmierstoffpumpe nach Fig. 2;
- Fig. 4: eine alternative Ausführungsform für eine Zentralschmieranlage nach der Erfindung;
- Fig. 5: eine weitere, alternative Ausführungsform für eine Zentralschmieranlage nach der Erfindung;
- Fig. 6: eine weitere, alternative Ausführungsform für eine Zentralschmieranlage nach der Erfindung;
- Fig. 7: eine weitere, alternative Ausführungsform für eine Zentralschmieranlage nach der Erfindung;
- Fig. 8: eine detailliertere Schnittansicht durch eine Ausführungsform einer Schmierstoffpumpe mit radial um einen Exzenter angeordneten Verteiler- und Direktpumpen;
- Fig. 9: eine Schnittansicht entlang eines Längsschnittes durch die Schmierstoffpumpe nach Fig. 2.

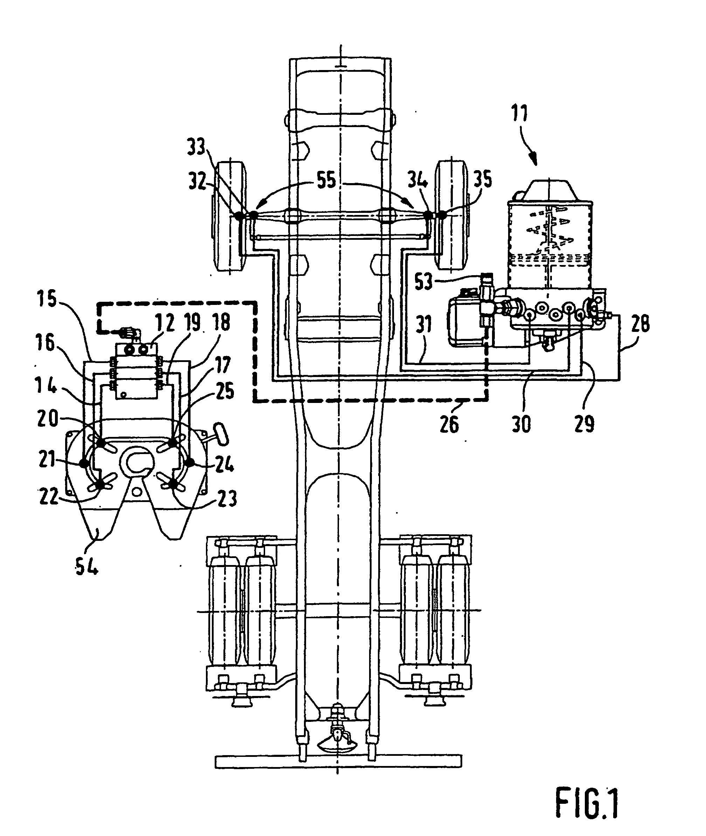

In Fig. 1 ist eine erste Ausführungsform einer fahrzeuggebundenen Zentralschmieranlage schematisch dargestellt. Die hier skizzierte Zentralschmieranlage ist an einer Zugmaschine mit Aufliegerkupplung 54 implementiert. Die Aufliegerkupplung 54 weist eine Mehrzahl von Schmierstellen 20 bis 25 auf, die über eine Schmierstoffpumpe 11 und einem dazwischen geschalteten Verteiler 12 mit Schmierstoff versorgt werden. Hierbei wird dem Verteiler 12 über eine Schmiermittelzuführung 26, die zusammen mit einem Überdruckventil 53 an einem Verteileranschluß 36 der Schmierstoffpumpe 11 angeschlossen, Schmierstoff zugeführt. Vom Verteiler 12 führt zu jeder Schmierstelle 20 bis 25 jeweils eine Verteilerleitung 14 bis 19. Bei dem hier dargestellten Verteiler 12 handelt es sich um einen Progressivverteiler, so daß jeder Schmierstelle 20 bis 25 eine exakt vordefinierte Schmiermittelmenge zugeführt wird.

Die Aufliegerkupplung 54 wird aufgrund der Zwischenschaltung des Verteilers 12, der hier als Dreikammer-Progressivverteiler ausgebildet ist, indirekt geschmiert.

Neben dieser indirekten Schmierung wird beim vorliegenden Ausführungsbeispiel eine Mehrzahl von Schmierstellen 32 bis 35, welche an Achsschenkelbolzen 55 der Zugmaschine vorgesehen sind, ohne Zwischenschaltung eines Verteilers direkt geschmiert. Hierzu weist die Schmierstoffpumpe 11 mehrere Direktanschlüsse 38 bis 41 auf. An die Direktanschlüsse 38 bis 41 sind jeweils Direktleitungen 28 bis 31 anschließbar, welche die Schmierstellen 32 bis 35 direkt mit Schmierstoff versorgen.

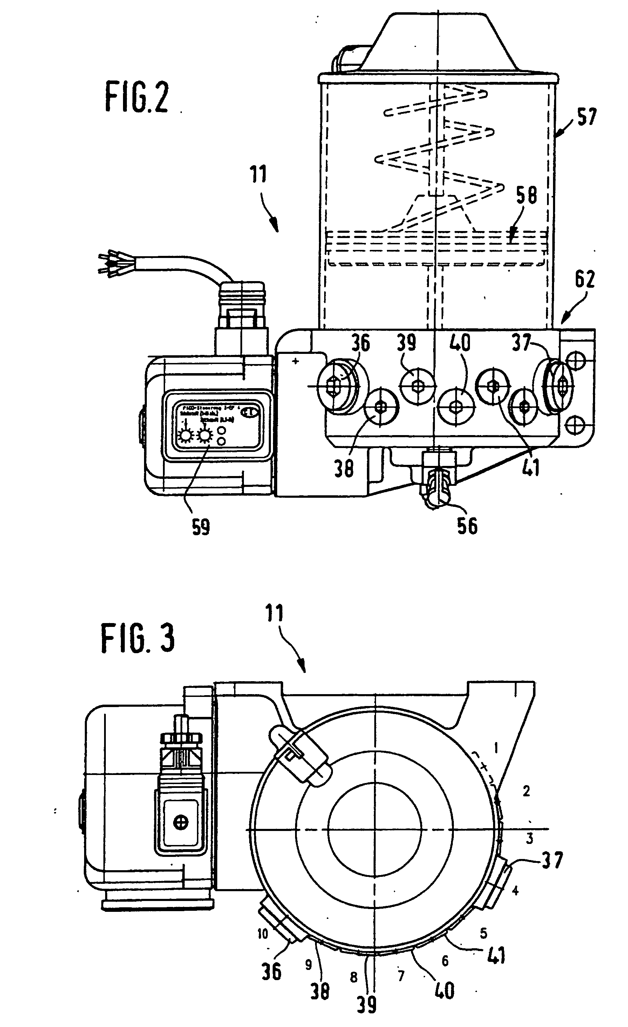

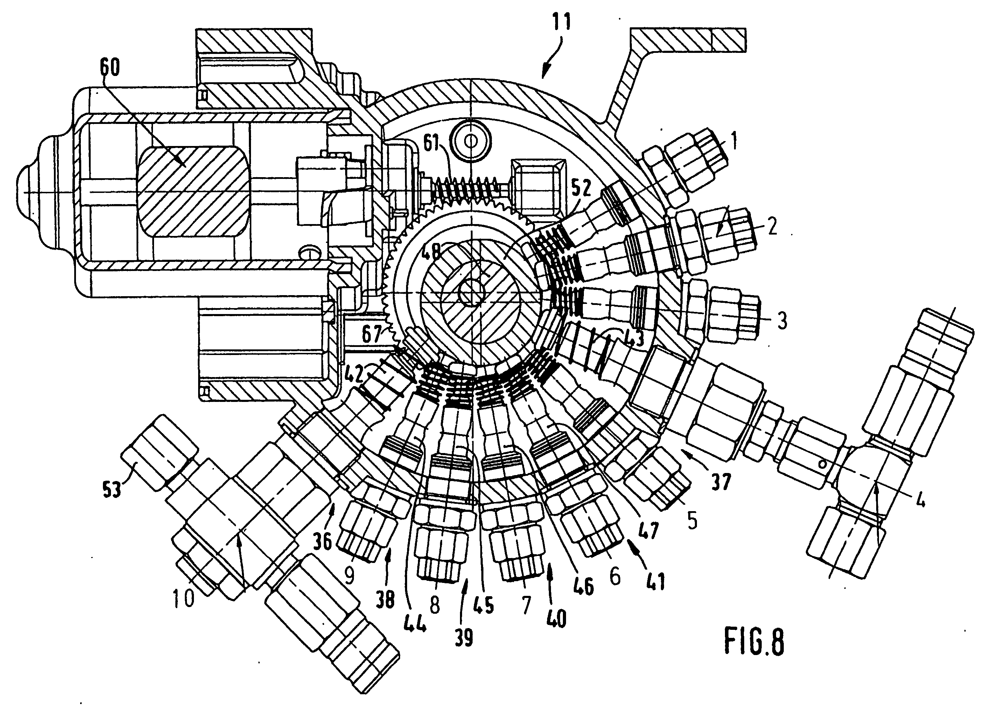

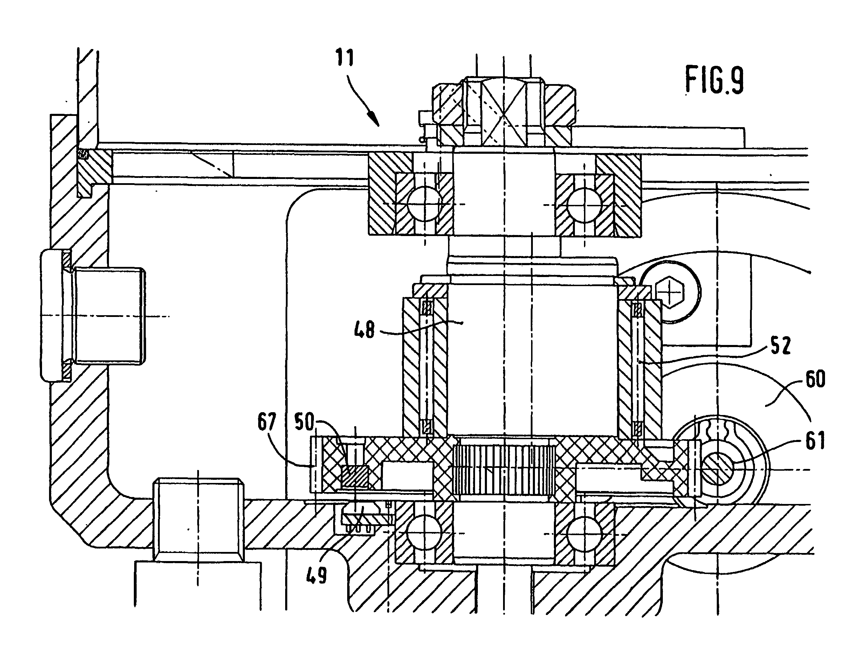

In Fig. 2 ist eine Ausführungsform der zur direkten und/oder indirekten Schmierung geeigneten Schmierstoffpumpe 11 dargestellt. Die Schmierstoffpumpe 11 weist einen unteren Pumpenabschnitt 62 auf, in dem ein Antriebsmotor 60 gelagert ist, der über ein Schneckengetriebe 61 einen Exzenter 48 antreibt (vgl. Fig. 8 und 9). Auf diesem unteren Pumpenabschnitt 62 befindet sich ein Schmierstoffresevoir 57, in dem eine bestimmte Menge an Schmierstoff gelagert werden kann. Über eine Füllstandsmeßeinrichtung 58 läßt sich der Füllstand des Schmierstoffreservoirs 57 kontrollieren. Außenseitig am unteren Pumpenabschnitt 62 sind bei der vorliegenden Ausführungsform zwei Verteileranschlüsse 36, 37 zum Anschluß von Schmiermittelzuführungen 26 zur Förderung von Schmierstoff an einen Verteiler 12 sowie bis zu acht Direktanschlüsse 38 bis 41 zur direkten Förderun von Schmierstoffen an Schmierstellen 32 bis 35 vorgesehen.

Im seitlichen Bereich des unteren Pumpenabschnitts 62 ist noch eine Steuerungseinheit 59 angeordnet, die die Einstellung bestimmter Steuerparameter, beispielsweise der Zykluszeit sowie der Schmierzeit gestattet.

Im unteren Bereich des unteren Pumpenabschnittes 62 ist bei der vorliegenden Ausführungsform ein Befüllnippel 56 vorgesehen, um das Schmierstoffreservoir 57 mit Schmierstoff zu befüllen.

In Fig. 3 ist eine schematische Schnittansicht dargestellt, in der vor allem die Anordnung der Verteileranschlüsse 36, 37 sowie der Direktanschlüsse 38 bis 41 veranschaulicht ist.

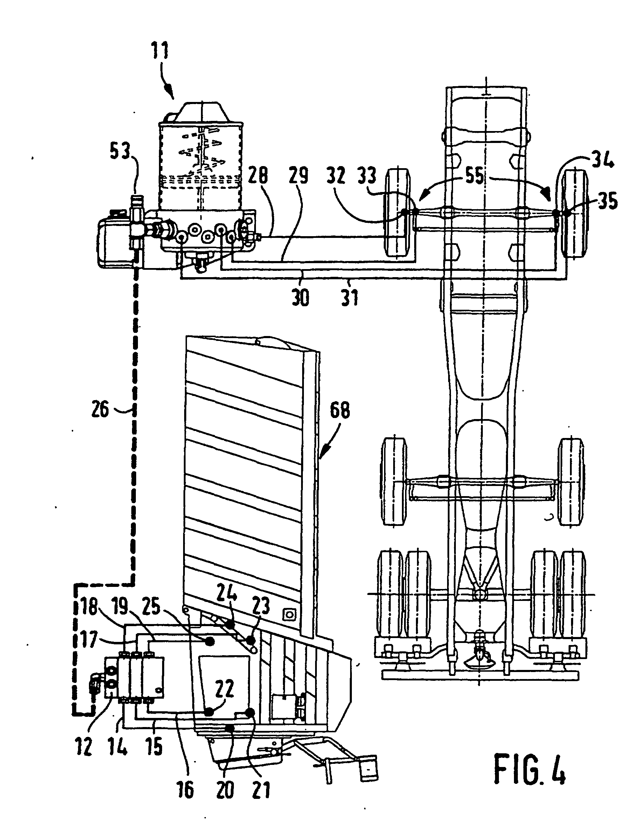

Im Fig. 4 ist eine bei einem Müllfahrzeug implementierte zentrale Schmieranlage dargestellt, wobei im wesentlich analog zu der Konfiguration nach Fig. 1 die Schmierstellen 32 bis 35 an den Achsschenkelbolzen 55 über Direktleitungen 28 bis 31 ohne Zwischenschaltung eines Verteilers direkt mit Schmierstoff versorgt werden. Ein Müllaufbau 68 wird an Schmierstellen 20 bis 25 über einen Verteiler 12 mit Schmierstoff versorgt.

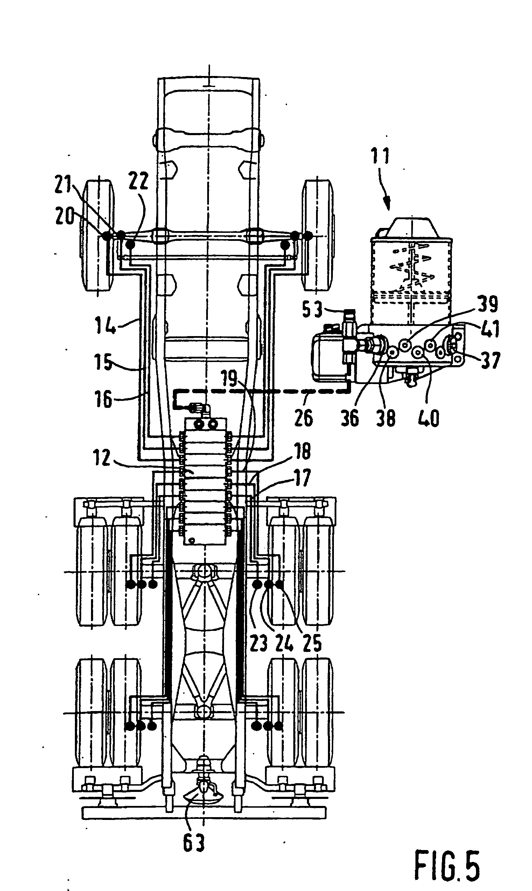

In Fig. 5 ist unter Verwendung der erfindungsgemäßen Schmierstoffpumpe 11 eine Schmierstoffversorgung entsprechend der im Stand der Technik bereits bekannten Schmierstoffversorgung veranschaulicht. Die Schmierstoffpumpe 11 fördert über eine Schmiermittelzuführung 26 den gesamten auszubringenden Schmierstoff an einen Verteiler 12. Vom Verteiler 12 wird der Schmierstoff in einem vordefinierten Verhältnis über Verteilerleitungen 14 bis 19 an Schmierstellen 20 bis 25 geführt.

Im Unterschied zum Stand der Technik weist jedoch die erfindungsgemäß Schmierstoffpumpe 11 eine Mehrzahl von Direktanschlüssen 38 bis 41 auf, die eine einfache und kostengünstige Erweiterung einer in einer bestimmten Weise konfigurierten Zentralschmieranlage gestatten. Soll nun eine weitere Schmierstelle, wie beispielsweise eine Anhängerkupplung 63 mit Schmierstoff beaufschlagt werden, so müßte herkömmlich der Verteiler, um ihn um eine weitere Kammer erweitern zu können, zerlegt werden. Mit der erfindungsgemäßen Schmierstoffpumpe 11 kann eine weitere Schmierstelle, beispielsweise an der Anhängerkupplung 63 über einen Direktanschluß 66 direkt an der Schmierstoffpumpe 11 völlig unter Umgehung des Verteilers 12 abgeschlossen werden.

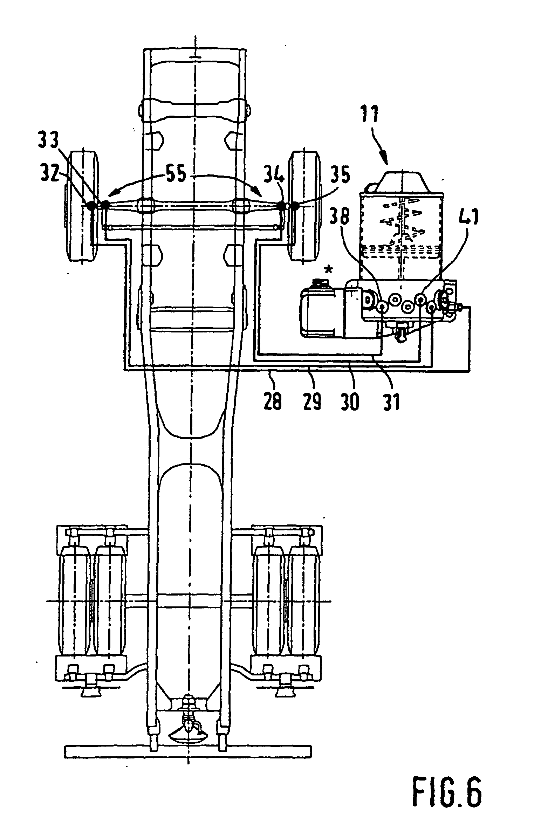

In Fig. 6 ist eine Schmierstoffversorgung dargestellt, die Schmierstellen 32 bis 35 an den Achsschenkelbolzen 55 eines Fahrzeugs direkt - ohne Zwischenschaltung eines Verteilers 12 - mit Schmierstoff versorgt. Hierzu sind vier Direktanschlüsse 38 bis 41 der Schmierstoffpumpe 11, die in der vorliegenden Ausführungsform insgesamt acht Direktanschlüsse aufweist, jeweils über Direktleitungen 28 bis 31 mit den zugeordneten Schmierstellen 32 bis 35 verbunden.

Eine derartige Schmierstoffversorgung läßt sich wesentlich einfacher und kostengünstiger implementieren. Ein vergleichsweise aufwendiger Verteiler wird nicht benötigt. In der dargestellten Version ließe sich die Schmierstoffversorgung noch in sehr großem Umfang erweitern, da - wie bereits erwähnt - bei der gezeigten Schmierstoffpumpe 11 noch vier Direktanschlüsse sowie zwei ungenutzte Verteileranschlüsse 36 bis 37 zur Verfügung stehen. Der Anschluß weiterer Schmierstellen läßt sich daher mit vergleichweise geringem Aufwand bewerkstelligen.

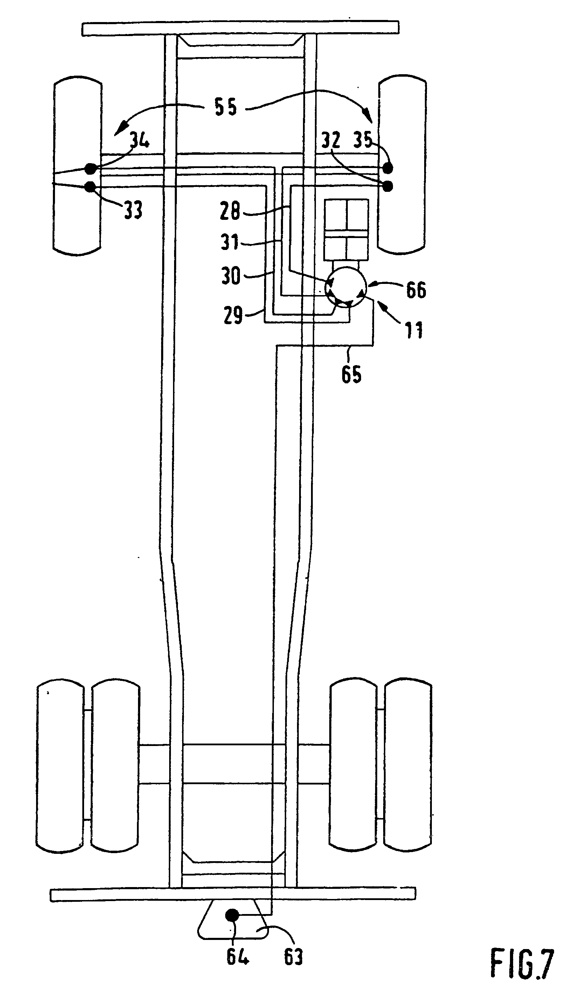

In Fig. 7 ist eine derartige Erweiterung der Schmierstoffversorgung nach Fig. 6 schematisch dargestellt. Hierbei werden die Achsschenkelbolzen 55 -wie in Fig. 6 veranschaulicht - über die vier Direktleitungen mit Schmierstoff versorgt. Eine fünfte Schmierstelle 64 ist über eine an einem Direktanschluß 66 der Schmierstoffpumpe 11 angeschlossene Direktleitung 65 mit der Schmierstoffpumpe 11 verbunden.

Aufgrund der hohen Universalität der Schmierstoffpumpe 11 läßt sich auch die Konfiguration noch in großem Umfang erweitern oder abändern.

In Fig. 8 ist eine Schnittansicht durch eine bevorzugte Ausführungsform der Schmierstoffpumpe 11 mit radial um einen Exzenter 48 umlaufenden Verteilerpumpen 42, 43 sowie Direktpumpen 44 bis 47 dargestellt. Der umlaufende Exzenter 48 wird von einem Antriebsmotor 60, vorzugsweise einem Elektromotor angetrieben, der seine Antriebskraft über ein Schneckengetriebe 61 auf einen drehfest mit dem Exzenter 48 verbundenen Zahnkranz 67 überträgt. Der Exzenter 48 treibt die Mehrzahl von Direktpumpen 44 bis 47 sowie die Mehrzahl von Verteilerpumpen 42, 43 gleichzeitig an. Hierzu sind die Mehrzahl von Verteilerpumpen 42, 43 und Direktpumpen 44 bis 47 um den Exzenter 48 herum radial derart angeordnet, daß jeweils ihr Kolben von einem an der Außenseite des Exzenters 48 angeordneten Nagellagerkäfig 52 beaufschlagt wird. Der Druck des Exzenters 48 bewegt jeweils die Kolben der Mehrzahl von Verteiler- und Direktpumpen 42, 43, 44 bis 47. Die bei der umlaufenden Bewegung des Exzenters 48 auftretenden Reibungskräfte werden durch die umfangsseitig angeordneten Nagellager des Nagellagerkäfigs 52 erheblich reduziert.

Die Zahl der Verteilerpumpen 42, 43 beträgt vorzugsweise zwei und die Anzahl der Direktpumpen vorzugsweise mindestens vier, weiter vorzugsweise mindestens sechs. In einer konkret bevorzugten, hier veranschaulichten Ausführungsform beträgt die Anzahl der Direktpumpen 44 bis 47 acht.

An den Verteileranschlüssen 36, 37 sind jeweils Überdruckventile 53 parallel zu den Schmiermittelzuführungen 26 angeschlossen, um eine Überdrucksicherung bereitzustellen.

In Fig. 9 ist eine zur Schnittansicht in Fig. 8 senkrechte Schnittansicht der bevorzugten Schmierstoffpumpe 11 dargestellt. Deutlich zu erkennen ist der im wesentlichen zylinderförmige Exzenter 48, der außenseitig einen ebenfalls zylinderförmigen Nagellagerkäfig aufweist. Der Exzenter 48 mit dem Nagellagerkäfig 52 ist drehfest mit dem bereits erwähnten Zahnkranz 67 verbunden, der über ein Schneckengetriebe 61 von einem Antriebsmotor 60 angetrieben wird.

Um die Umdrehungszahl des Exzenters 48 feststellen zu können, ist drehfest mit dem Exzenter 48 ein Magnet 50 verbunden, der mit jeder Umdrehung einen stationären Rollsensor HALL-Sensor 49 überstreicht. Der HALL-Sensor 49 registriert damit die Zahl der Umdrehungen, aus der sich eine Aussage über die ausgebrachte Schmierstoffmenge treffen läßt.

Es hat sich nämlich gezeigt, daß die Umdrehungszahl des Exzenters 48 je nach Konsistenz des Schmierstoffes, die beispielsweise bei Temperaturunterschieden stark schwankt, unterschiedlich ist. Die frühere Auswertung der ausgebrachten Schmiermenge anhand der Betriebszeit der Schmierstoffpumpe 11 war daher ungenau. Nach einem unabhängigen Aspekt der vorliegenden Erfindung wird die ausgebrachte Schmierstoffmenge anhand der Umdrehungszahl des Exzenters 48 festgestellt. Es versteht sich von selbst, daß die Umdrehungszahl des Exzenters nicht zwangsläufig mittels HALL-Sensor und Magnet, sondern auch mit anderen Meßeinrichtungen erfaßt werden kann.

### Bezugszeichenliste

- 11: Schmierstoffpumpe
- 12: Verteiler
- 14 - 19: Verteilerleitungen
- 20 - 25: Schmierstellen
- 26: Schmiermittelzuführungen
- 28 - 31: Direktleitungen
- 32 - 35: Schmierstellen
- 36,37: Verteileranschlüsse
- 38 - 41: Direktanschlüsse
- 42,43: Verteilerpumpen
- 44 - 47: Direktpumpen
- 48: umlaufende Exzenter
- 49: Meßeinrichtung, Rollsensor, HALL-Sensor
- 50: Meßeinrichtung, Magnet
- 52: Nagellagerkäfig
- 53: Überdruckventil
- 54: Aufliegerkupplung
- 55: Achsschenkelbolzen
- 56: Befüllnippel
- 57: Schmierstoffreservoir
- 58: Füllstandsmeßeinrichtung
- 59: Steuerungseinheit
- 60: Antriebsmotor
- 61: Schneckengetriebe
- 62: unterer Pumpenabschnitt
- 63: Anhängerkupplung
- 64: Schmierstelle
- 65: Direktleitung
- 66: Direktanschluß
- 67: Zahnkranz

## Patentansprüche

1. Fahrzeuggebundene Zentralschmieranlage als Einbauteil für ein Fahrzeug umfassend:
- eine Schmierstoffpumpe (11),
- ein oder mehrere Verteiler (12),
- eine Mehrzahl von Verteilerleitungen (14 bis 19), die jeweils eine mit Schmierstoff zu beaufschlagende Schmierstelle (20 bis 25) mit dem jeweils zugeordneten Verteiler (12) verbinden und
- Schmiermittelzuführungen (26) zwischen der Schmierstoffpumpe (11) und dem einen oder mehreren Verteilern (12), die jeweils eine vorbestimmte Menge Schmierstoff an den zugeordneten Verteiler (12) fördern, **dadurch gekennzeichnet, daß**
an der Schmierstoffpumpe neben Schmiermittelzuführungen (26) für die Verteiler (12) ein oder mehrere Direktleitungen (28 bis 31) anschließbar sind,
um eine vorbestimmte Menge von Schmierstoffen ohne Zwischenschaltung eines Verteilers (12) an eine oder mehrere Schmierstellen (32 bis 35) zu fördern,
wobei die Schmierstoffpumpe (11) mindestens einen Verteileranschluß (36, 37) zum Anschluß einer Schmiermittelzuführung (26) als Zuleitung für einen Verteiler (12) und mindestens einen Direktanschluss (38 bis 41) zum Anschluß einer an eine Schmierstelle (32 bis 35) führenden Direktleitung (28 bis 31) umfasst
und wobei innerhalb der Schmierstoffpumpe (11) den Verteileranschlüssen (36, 37) Verteilerpumpen (42, 43) und den Direktanschlüssen (38 bis 41) Direktpumpen (44 bis 47) zugeordnet sind.

2. Fahrzeuggebundene Zentralschmieranlage nach Anspruch 1,
**dadurch gekennzeichnet,**
**daß** die Verteilerpumpen (42, 43) jeweils eine Förderleistung von mindestens 0,04 cm3/Hub, vorzugsweise mindestens 0,08cm3/Hub und weiter vorzugsweise mindestens 0,12 cm3/Hub aufweisen.

3. Fahrzeuggebundene Zentralschmieranlage nach Anspruch 1 oder 2,
**dadurch gekennzeichnet,**
**daß** die Direktpumpen (44 bis 47) jeweils eine Förderleistung im Bereich von 0,005 cm3/Hub bis 0,05 cm3/Hub aufweisen.

4. Fahrzeuggebundene Zentralschmieranlage nach einem der Ansprüche 1 bis 3,
**dadurch gekennzeichnet,**
**daß** die Verteilerpumpen (42, 43) und die Direktpumpen (44 bis 47) gemeinsam durch einen umlaufenden Exzenter (48) angetrieben werden.

5. Fahrzeuggebundene Zentralschmieranlage nach einem der Ansprüche 1 bis 4,
**dadurch gekennzeichnet,**
**daß** zur Verringerung auftretender Reibung beim gleichzeitigen Antrieb von Verteilerpumpen (42, 43) und Direktpumpen (44 bis 47) der umlaufende Exzenter (48) außenseitig mit einem Nadellagerkäfig (52) versehen ist.

6. Fahrzeuggebundene Zentralschmieranlage nach einem der Ansprüche 1 bis 5,
**dadurch gekennzeichnet,**
**daß** Meßeinrichtungen (49, 50) zur Erfassung der Umdrehungszahl des Exzenters (48) der Schmierstoffpumpe (11) angeordnet sind, um die ausgebrachte Menge an Schmierstoff zu erfassen.

7. Fahrzeuggebundene Zentralschmieranlage nach einem der Ansprüche 1 bis 6,
**dadurch gekennzeichnet,**
**daß** die Schmierstoffpumpe (11) eine Schnittstelle (51) zum Anschluß an einen zentralen Bordcomputer des Fahrzeugs aufweist.

8. Fahrzeuggebundene Zentralschmieranlage nach einem der Ansprüche 1 bis 7,
**dadurch gekennzeichnet,**
**daß** mindestens zwei Verteileranschlüsse (36, 37) und mindestens vier, vorzugsweise mindestens acht Direktanschlüsse (38 bis 41) vorgesehen sind.

9. Schmierstoffpumpe zur Verwendung in einer Schmiermittelanlage nach einem der Ansprüche 1 bis 8, die mindestens einen Verteileranschluß (36, 37) zum Anschluß einer Schmiermittelzuführung (26) als Zuleitung für einen Verteiler (12) und mindestens einen Direktanschluß (38 bis 41) zum Anschluß einer Direktleitung (28 bis 31) als direkte Zuleitung an eine Schmierstelle (32 bis 35) aufweist, wobei innerhalb der Schmierstoffpumpe (11) den Verteileranschlüssen (36, 37) Verteilerpumpen (42, 43) und den Direktanschlüssen (38 bis 41) Direktpumpen (44 bis 47) zugeordnet sind.

## Claims

1. Vehicle-bound central lubricator as a mounting part for a vehicle comprising:
- a lubricating pump (11),
- one or more distributors (12),
- a plurality of distributor pipes (14 to 19), which in each case connect a lubricating point (20 to 25) to be exposed to lubricant with the particular assigned distributor (12) and
- lubricant feeds (26) between the lubricating pump (11) and the one or more distributors (12), which in each case convey a predetermined quantity of lubricant to the assigned distributors (12),
**characterised in that** one or more direct pipes (28 to 31) can be connected to the lubricating pump in addition to lubricant feeds (26) for the distributors (12), in order to convey a predetermined quantity of lubricants, without interposing a distributor (12), to one or more lubricating points (32 to 35), wherein the lubricating pump (11) comprises at least one distributor connection (36, 37) for connection of a lubricant feed (26) as a supply pipe for a distributor (12) and at least one direct connection (38 to 41) for connection of a direct pipe (28 to 31) leading to a lubricating point (32 to 35), and
wherein within the lubricating pump (11), distributor pumps (42, 43) are assigned to the distributor connections (36, 37) and direct pumps (44 to 47) are assigned to the direct connections (38 to 41).

2. Vehicle-bound central lubricator according to claim 1, **characterised in that** the distributor pumps (42, 43) have in each case a conveying capacity of at least 0.04 cm3/stroke, preferably at least 0.08 cm3/stroke and also preferably at least 0.12 cm3/stroke.

3. Vehicle-bound central lubricator according to claim 1 or 2, **characterised in that** the direct pumps (44 to 47) have in each case a conveying capacity in the range from 0.005 cm3/stroke to 0.05 cm3/stroke.

4. Vehicle-bound central lubricator according to one of claims 1 to 3,
**characterised in that** the distributor pumps (42, 43) and the direct pumps (44 to 47) are driven together by a revolving eccentric (48).

5. Vehicle-bound central lubricator according to one of claims 1 to 4,
**characterised in that** to reduce friction which occurs during simultaneous driving of distributor pumps (42, 43) and direct pumps (44 to 47), the revolving eccentric (48) is provided on the outer side with a needle bearing cage (52).

6. Vehicle-bound central lubricator according to one of claims 1 to 5,
**characterised in that** measuring devices (49, 50) are arranged to record the number of revolutions of the eccentric (48) of the lubricating pump (11) in order to record the quantity of lubricant brought out.

7. Vehicle-bound central lubricator according to one of claims 1 to 6,
**characterised in that** the lubricating pump (11) has an interface (51) for connection to a central on-board computer of the vehicle.

8. Vehicle-bound central lubricator according to one of claims 1 to 7,
**characterised in that** at least two distributor connections (36, 37) and at least four, preferably at least eight, direct connections (38 to 41) are provided.

9. Lubricating pump for use in a lubricator according to one of claims 1 to 8, which has at least one distributor connection (36, 37) for connection of a lubricant feed (26) as a supply pipe for a distributor (12) and at least one direct connection (38 to 41) for connection of a direct pipe (28 to 31) as a direct supply pipe to a lubricating point (32 to 35), wherein within the lubricating pump (11), distributor pumps (42, 43) are assigned to the distributor connections (36, 37) and direct pumps (44 to 47) are assigned to the direct connections (38 to 41).

## Revendications

1. Installation de lubrification centralisée pour véhicule comme partie de montage d'un véhicule comprenant :
- une pompe de lubrifiant (11)
- un ou plusieurs distributeurs (12)
- une pluralité de conduits de distributeurs (14 à 19), qui relient chacun un emplacement à lubrifier (20 à 25) à charger avec le lubrifiant au distributeur (12) respectivement associé et
- des conduits d'amenée de lubrifiant (26) entre la pompe de lubrifiant (11) et un ou plusieurs distributeurs (12) qui convoient chacun une quantité prédéterminée de lubrifiant au distributeur associé (12), **caractérisée en ce que**
- à la pompe de lubrifiant, à part les conduits d'amenée de lubrifiant (26) pour les distributeurs (12), un ou plusieurs conduits directs (28 à 31) peuvent être raccordés,
- pour convoyer une quantité prédéterminée de lubrifiant, sans intercaler de distributeur (12), à un ou plusieurs emplacements à lubrifier (32 à 35),
- où la pompe de lubrifiant (11) comporte au moins un raccord de distributeur (36, 37) pour raccorder un conduit d'amenée de lubrifiant (26) comme conduit d'amenée pour un distributeur (12) et au moins un raccord direct (38 à 41) pour le raccordement d'un conduit direct (28 à 31) menant à un emplacement à lubrifier (32 à 35),
- et où à l'intérieur de la pompe de lubrifiant (11), des pompes de distributeur (42, 43) sont associées aux raccords de distributeurs (36, 37) et des pompes directes (44 à 47) aux raccords directs (38 à 41).

2. Installation de lubrification centralisée pour véhicule selon la revendication 1, **caractérisée en ce que** les pompes de distributeur (42,43) ont chacune un débit d'au moins 0,04 cm³ /course, de préférence d'au moins 0,08 cm³ / course et encore de préférence d'au moins 0,12 cm³ / course.

3. Installation de lubrification centralisée pour véhicule selon la revendication 1 ou 2, **caractérisée en ce que** les pompes directes (44 à 47) ont respectivement un débit dans la plage de 0,005 cm³ /course à 0,05 cm³ /course.

4. Installation de lubrification centralisée pour véhicule selon l'une des revendications 1 à 3, **caractérisée en ce que** les pompes de distributeur (42,43) et les pompes directes (44 à 47) sont entraînées ensemble par un excentrique tournant (48).

5. Installation de lubrification centralisée pour véhicule selon l'une des revendications 1 à 4, **caractérisée en ce que** pour réduire le frottement produit, lors d'un entraînement simultané des pompes de distributeur (42,43) et des pompes directes (44 à 47), l'excentrique tournant (48) est pourvu au coté extérieur d'une cage de roulement à aiguilles (52).

6. Installation de lubrification centralisée pour véhicule selon l'une des revendications 1 à 5, **caractérisée en ce que** des installations de mesure (49,50) sont disposées pour détecter le nombre de tours de l'excentrique (48) de la pompe de lubrifiant (11) pour détecter la quantité de lubrifiant évacuée.

7. Installation de lubrification centralisée pour véhicule selon l'une des revendications 1 à 6, **caractérisée en ce que** la pompe de lubrifiant (11) présente une interface (51) pour la connexion à un ordinateur de bord central du véhicule.

8. Installation de lubrification centralisée pour véhicule selon les revendications 1 à 7, **caractérisée en ce qu'**au moins deux raccords de distributeur (36,37) et au moins quatre, de préférence au moins huit raccords directs (38 à 41) sont prévus.

9. Pompe de lubrifiant pour utilisation dans une installation de lubrifiant selon l'une des revendications 1 à 8, qui présente au moins un raccord de distributeur (36,37) pour raccorder un conduit d'amenée de lubrifiant (26) comme conduit d'amenée pour un distributeur (12) et au moins un raccord direct (38 à 41) pour le raccordement d'un conduit direct (28 à 31) comme conduit d'amenée direct à un emplacement à lubrifier (32 à 35), où à l'intérieur de la pompe de lubrifiant (11) sont associées aux raccords de distributeur (36,37) des pompes de distributeur (42,43) et aux raccords directs (38 à 41) des pompes directes (44 à 47).
